# EUROPÄISCHE PATENTSCHRIFT

(11) **EP 3 583 682 B1**
(45) Veröffentlichungstag und Bekanntmachung des Hinweises auf die Patenterteilung: **10.07.2024**
(21) Anmeldenummer: 18709917.1
(22) Anmeldetag: 14.02.2018
(51) Int. Cl.: H02K 11/33

(54) **ELEKTRONIKGEHÄUSE FÜR EINEN E-ACHSEN-ANTRIEB UND E-ACHSE MIT ELEKTRONIKGEHÄUSE**
ELECTRONICS HOUSING FOR AN ELECTRIC AXLE DRIVE AND ELECTRIC AXLE WITH AN ELECTRONICS HOUSING
BOITIER ÉLECTRONIQUE POUR UNE PROPULSION PAR ESSIEU ÉLECTRIQUE AINSI QUE ESSIEU ÉLECTRIQUE AVEC UN BOITIER ÉLECTRONIQUE

(30) Priorität: 16.02.2017 DE 102017103197
(43) Veröffentlichungstag der Anmeldung: 25.12.2019
(73) Patentinhaber: Schaeffler Technologies AG & Co. KG, 91074 Herzogenaurach (DE)
(72) Erfinder: SPECK, Andre, 76316 Malsch (DE); ENDERLE, Eduard, 77723 Gengenbach (DE); SCHWANEMANN, Peter, 77815 Bühl (DE); MÖHRING, Christian, 76199 Karlsruhe-Rüppurr (DE); HERRMANN, Johannes, 77855 Achern (DE); GLAS, Ronald, 77880 Sasbach (DE); BOTIOV, Julian, 77815 Bühl (DE); BLAES, Cédric, 67470 Munchhausen (FR)
(86) Internationale Anmeldenummer: PCT/DE2018/100127
(87) Internationale Veröffentlichungsnummer: WO 2018/149450

(56) Entgegenhaltungen:
- EP-A2- 2 475 079
- EP-A2- 2 475 079
- DE-A1- 102010 041 589
- DE-A1- 102010 041 589
- DE-A1- 102011 089 667
- DE-A1- 102011 089 667
- DE-A1- 102014 019 433
- DE-A1- 102014 019 433

## Beschreibung

Die Erfindung betrifft einen E-Achsen-Antrieb eines Kraftfahrzeugs, insbesondere eines Hybridfahrzeugs mit einer P4-Hybrid-Anordnung, wobei das Elektronikgehäuse zur Aufnahme einer Leistungselektronik zum Spannungsverarbeiten in Hochspannungssystemen/Hochvoltsystemen oder 48-Volt-Spannungssystemen/48-Volt-Gleichstrom-Systemen/48V-DC-Systemen vorbereitet ist.

Aus dem Stand der Technik sind bereits E-Achsen-Antriebe mit zugehörigen Gehäusen bekannt.

Unter anderem offenbart die DE 10 2010 041 589 A1 ein Gehäuseelement zur Aufnahme einer Leistungselektronik einer Elektromaschine, aufweisend einen ersten Gehäusebereich, welcher zur Aufnahme einer Leistungselektronik eingerichtet ist, wobei der erste Gehäusebereich einen Kühlbereich aufweist, welcher eingerichtet ist, mit einem Kühlbereich einer elektrischen Maschine zur gemeinsamen Kühlung von Leistungselektronik und elektrischer Maschine gekoppelt zu werden, wobei der erste Gehäusebereich ein Dichtelement aufweist, welches eingerichtet ist, mit zumindest einem weiteren Gehäuseelement einer elektrischen Maschine abdichtend gekoppelt zu werden.

Der Stand der Technik hat jedoch immer den Nachteil, dass in dem Gehäuse für die Leistungselektronik nur Komponenten und Schnittstellen im Hochspannungsbereich integriert sind, jedoch Niederspannungskomponenten und Niederspannungsschnittstellen in einem separaten Gehäuse eingehaust werden. Durch dieses zweite separate Gehäuse für die Niederspannungselektronik sind also weitere Kabel und Stecker zur Verbindung nötig, was sich in erhöhten Kosten und vergrößertem, benötigten Bauraum widerspiegelt.

Bezüglich weiteren Standes der Technik wird auf die DE 10 2011 089 667 A1, die EP 2 475 079 A2 und die DE 10 2014 019 433 A1 verwiesen.

DE 10 2010 041 589 A1 offenbart:
E-Achsen-Antrieb eines Kraftfahrzeugs, wobei der E-Achsen-Antrieb aufweist:
ein Gesamtgehäuse, das ausgelegt ist, um den E-Achsen-Antrieb aufzunehmen;
ein Elektronikgehäuse; eine Leistungselektronik zum Spannungsverarbeiten in Hochspannungssystemen wobei das Elektronikgehäuse mit dem Gesamtgehäuse verbunden ist.

Es ist die Aufgabe der Erfindung, die Nachteile aus dem Stand der Technik zu vermeiden oder wenigstens dadurch zu verringern, dass ein Elektronikgehäuse derart ausgelegt wird, dass die Kompaktheit der Gehäuseteile erhöht und der Platzbedarf gesenkt wird.

Insbesondere soll erreicht werden, dass keine Stecker und Kabel in dem Fahrzeug verlegt werden müssen.

Diese Aufgabe wird durch einen E-Achsen-Antrieb gemäss Anspruch 1 gelöst.

Dies hat den Vorteil, dass durch die Integration aller Elektronikkomponenten in einem Gehäuse erheblich Bauraum eingespart werden kann und zusätzlich Bauteile, wie z. B. Kabel oder Stecker, nicht mehr benötigt werden, was vorteilhafterweise die Kosten senkt und auch Leistungsverluste, durch beispielsweise Leitungswiderstände in den Kabeln, auf ein Minimum beschränkt.

Vorteilhafte Ausführungsformen werden in den Unteransprüchen beansprucht und werden nachfolgend zusammen mit erfindungswesentlichen Merkmalen näher erläutert.

Die Niederspannungskomponente ist eine Motorsensorik bzw. E-Maschinensensorik, ein Temperatursensor, eine Kühlung und/oder eine Aktorsensorik, wie z. B. eine Parksperren- oder Getriebeaktorik. Dadurch können die Niederspannungskomponenten vorteilhafterweise auf einem kleinen Bauraum angeordnet werden und über eine gemeinsame oder mehrere Schnittstellen mit den zugehörigen Aktoren verbunden werden. Weiterhin kann so ein komplettes, geprüftes und betriebsfähiges System bereitgestellt werden, das ohne die Verlegung von Kabeln im Fahrzeug einsetzbar ist. Somit reduziert sich auch die Fehleranfälligkeit der Elektronikkomponenten, da insbesondere Steckverbindungen, Kabel und andere Schnittstellen häufige Fehlerursachen darstellen.

Zudem ist es zweckmäßig, wenn das Elektronikgehäuse Niederspannungsschnittstellen für Aktoren aufweist. So können die zugehörigen Aktoren für die Sensoren in geeigneter Weise angeschlossen werden, damit die Regelung durch den Sensor-Aktor-Schaltkreis einwandfrei funktioniert.

Das Elektronikgehäuse ist mit einem Gesamtgehäuse verbunden, wobei das Gesamtgehäuse ausgelegt ist, um den E-Achsen-Antrieb aufzunehmen. So werden die insbesondere sehr teuren, meterlangen Hochspannungs-Kabel zwischen der E-Achse und der Elektronik eingespart, was die Kompaktheit des Gehäuses erheblich steigert und den Bauraumbedarf verringert. So können also vorteilhafterweise die hohen Kosten der Hochspannungs-Verkabelung und der Stecker eingespart werden.

Auch ist es vorteilhaft, wenn der E-Achsen-Antrieb eine Elektromaschine bzw. eine E-Maschine bzw. einen Elektromotor, ein Getriebe und/oder ein Differential enthält. So kann die Leistung/Power der Batterie über die Leistungselektronik insbesondere an die Elektromaschine weitergegeben werden.

Zudem ist es von Vorteil, wenn das Elektronikgehäuse einteilig/einmaterialig mit dem Gesamtgehäuse ausgebildet ist oder wenn das Elektronikgehäuse und das Gesamtgehäuse Schnittstellen aufweisen, die aufeinander abgestimmt sind. Bei der einteiligen Ausbildung kann also vorteilhafterweise auf das separate Elektronikgehäuse verzichtet werden, was zusätzlich eine Einsparung der Schnittstellen zwischen den Gehäusen bedeutet. Ein weiterer Vorteil der einteiligen Ausführung der beiden Gehäuse ist, dass zusätzliche Dichtschnittstellen, z. B. dem Gehäuse der Elektronik an den Kühlanschlüssen und an den Phasenanschlüssen der E-Maschine, entfallen können. Bei der zweiteiligen Ausführung des Elektronikgehäuses des Gesamtgehäuses ist es insbesondere von Vorteil, dass die beiden Gehäuse sehr variabel sind und damit verbunden eine Baukasten-Fähigkeit der Gehäuse über verschiedene Anwendungen und Projekte hin sichergestellt werden kann.

Es ist zweckmäßig, wenn die Schnittstellen zum formschlüssigen Zusammenpassen geometrisch beschaffen sind. So wird also allein durch die Abstimmung der beiden Gehäuse ein Vorteil hinsichtlich der Dichtung und der Nutzung einer gemeinsamen Kühlquelle gewährleistet.

Ferner können die Schnittstellen über Schrauben, Nieten und/oder Stifte verbunden sein. So können die beiden Gehäuse einfach aneinander montiert werden, aber auch bei Bedarf, z. B. bei der Wartung oder einer Demontage, wieder einfach voneinander gelöst werden.

Außerdem ist es vorteilhaft, wenn das Elektronikgehäuse unterhalb (in Schwerkraftrichtung gesehen) des Gesamtgehäuses angeordnet ist, was eine leichte Zugänglichkeit zu den Elektronikkomponenten sicherstellt, da der E-Achsen-Antrieb meistens an der Hinterachse verbaut wird, und somit der Zugang von unten erleichtert wird. Bevorzugterweise befindet sich das Elektronikgehäuse also im eingebauten Zustand auf der Unterseite des Gesamtgehäuses.

Ferner ist es zweckmäßig, wenn an dem Elektronikgehäuse ein Kühlanschluss vorhanden ist. So wird sichergestellt, dass die eingehausten Komponenten sich nicht überhitzen, sondern eine ausreichende Kühlung und Funktionsfähigkeit gewährleistet werden kann. Es wird also mittels des Kühlanschlusses Kühlmittel zugeführt, das im Elektronikgehäuse wärmeaufnehmend wirkt und beim Verlassen des Elektronikgehäuses wärmeabführend wirkt.

Weiter bevorzugt ist der Kühlanschluss an dem Elektronikgehäuse seitlich angeordnet, was eine bessere Anschlussmöglichkeit für den Kühlzufluss darstellt und somit die umgebenden Bauteile nur geringfügig beeinflusst.

Auch ist es vorteilhaft, wenn der Kühlanschluss mit einem Kühlkreis der E-Maschine oder des Kraftfahrzeugs verbunden ist, damit der bereits vorhandene Kühlkreis für die in dem Gesamtgehäuse eingehausten Komponenten auch für das Elektronikgehäuse verwendet werden kann und kein eigener Kühlkreislauf eingerichtet werden muss, was eine Einsparung an Bauteilen und dementsprechend auch an Kosten mit sich bringt.

Auch kann zwischen dem Elektronikgehäuse und dem Gesamtgehäuse oder zwischen verschiedenen Komponenten innerhalb des Elektronikgehäuses ein Zwischenelement angeordnet sein, was insbesondere nach Art einer Metallplatte/eines Blechteils ausgebildet ist. Dadurch kann insbesondere das Steuermodul/die Motorsensorik beispielsweise von der E-Maschine besser abgeschirmt werden, so dass die elektromagnetische Verträglichkeit verbessert wird.

Bevorzugterweise ist das Elektronikgehäuse aus Aluminium ausgebildet oder umfasst Aluminium. Da Aluminium gute Eigenschaften hinsichtlich der elektromagnetischen Verträglichkeit aufweist, wird gerade für das Elektronikgehäuse dieser Werkstoff empfohlen, damit die elektrischen Komponenten trotz der baulichen Nähe von der E-Maschine nicht negativ beeinflusst werden.

Ferner ist es vorteilhaft, wenn an dem Elektronikgehäuse ein Anschluss für einen 28-PIN-Signalstecker vorhanden ist. Dieser Anschluss zählt zu den Standards für Elektronikkomponenten und ist somit besonders geeignet als Anschluss für zugeordnete Aktoren.

Auch ist es vorteilhaft, wenn der Anschluss für den Signalstecker zu dem Elektronikgehäuse abgedichtet ist, was ausschließt, dass Partikel oder Flüssigkeiten über den Anschluss in das Elektronikgehäuse eindringen können.

Auch kann an dem Elektronikgehäuse ein Anschluss für eine Stromversorgung vorhanden sein. Diese Stromversorgung kann nach dem Verarbeiten durch die Leistungselektronik zum Versorgen der in dem Gesamtgehäuse angeordneten Komponenten, insbesondere der E-Maschine, verwendet werden. Insbesondere kann die Stromversorgung über eine Art Battery Line realisiert werden.

Auch ist es Teil der erfindungsgemäßen Lösung, eine E-Achse mit dem Elektronikgehäuse und mit einem Gesamtgehäuse, in dem ein Rotor und ein Stator einer E-Maschine eingehaust sind, einzusetzen.

Mit anderen Worten findet die Erfindung Einsatz bei elektrischen Achs-Anwendungen. Zu der E-Achse gehört ein Getriebe, das eventuell mehrstufig ausgebildet ist, sowie gegebenenfalls eine Park- oder eine Differentialsperre, eine E-Maschine und eine Leistungselektronik. Oftmals werden separat gehauste Leistungselektroniken unabhängig von der E-Achse im Fahrzeug platziert, so dass die Verbindung zwischen der Leistungselektronik und der E-Achse mittels Hochspannungskabeln realisiert werden muss. Dadurch entstehen hohe Kosten für die Hochspannungs-Verkabelung und die Stecker, aber auch wird ein erhöhter Bauraum für die Platzierung der Leistungselektronik benötigt. Insbesondere, wenn an der E-Achse zusätzliche Aktoren vorhanden sind, wird üblicher Weise eine zusätzliche separate Elektronik für diese Aktoren benötigt, was wiederum die Kosten für Kabel, Stecker und Gehäuse erhöht. Deshalb sieht die Erfindung vor, dass die Leistungselektronik in das vorhandene E-Achsen-Gehäuse/Gesamtgehäuse integriert wird.

Dabei sollen auch die Niedervolt-Schnittstellen für eine Motorsensorik in die Leistungselektronik integriert werden. Auch gegebenenfalls vorhandene Aktorelektroniken sollen in der Leistungselektronik integriert werden. Um die Zugänglichkeit zu der Leistungselektronik und den anderen Elektronikkomponenten zu sichern, ist es vorteilhaft, wenn das Leistungselektronikgehäuse bauraumsparend nahe an der E-Maschine unterhalb der E-Achse in dem Gehäuse integriert wird. Als Schnittstelle zwischen dem Gehäuse der Leistungselektronik und dem Gehäuse der E-Achse ist es denkbar, entweder die beiden Gehäuse einteilig/einmaterialig auszubilden, oder die Leistungselektronik in dem Gehäusedeckel zu montieren und anschließend an dem Gehäuse der E-Achse zu befestigen. So können beide Anordnungen in dem eigenen, separaten Gehäuse vormontiert werden und dann einfach zusammengefügt werden. Dies sichert eine hohe Variabilität der Gehäuseausbildungen und eine Baukasten-Fähigkeit über verschiedene Anwendungen und Projekte hinweg.

Werden die E-Achse und die Leistungselektronik in einem gemeinsamen Gehäuse montiert, wird die Leistungselektronik in dem unteren Bereich des Gehäuses angeordnet. Es kann also auf ein separates Elektronikgehäuse verzichtet werden. Das gemeinsame Gehäuse wird mit einem Deckel unterhalb der Elektronikkomponenten abgeschlossen, damit die Elektronikkomponenten für eine Wartung oder Demontage zugänglich sind. So kann ein Komplettsystem bereitgestellt werden, dass ein geprüftes und betriebsfähiges System enthält. Außerdem kann so auf teure Hochspannungs-Konnektoren zwischen der E-Achse und der Leistungselektronik verzichtet werden. Insbesondere wird die Erfindung in Hybridmodulen eingesetzt. Vorzugsweise wird eine solche integrierte Leistungselektronik in einer P4-Hybrid-Anordnung eingesetzt.

Die Erfindung wird nachfolgend mit Hilfe einer Zeichnung erläutert. Es zeigen:
Fig. 1 eine Querschnittsdarstellung eines Elektronikgehäuses, das mit einem Gesamtgehäuse für einen E-Achsen-Antrieb verbunden ist, in einem ersten Ausführungsbeispiel,
Fig. 2 eine zur Fig. 1 axial versetzte Querschnittsdarstellung des Elektronikgehäuses und des Gesamtgehäuses,
Fig. 3 eine zu Fig. 1 und Fig. 2 axial versetzte Querschnittsdarstellung des Elektronikgehäuses und des Gesamtgehäuses,
Fig. 4 eine perspektivische Ansicht des auf das Gesamtgehäuse montierten Elektronikgehäuses,
Fig. 5 eine Explosionsdarstellung des Gesamtgehäuses und des Elektronikgehäuses,
Fig. 6 eine zur Fig. 5 gedrehte Explosionsdarstellung des Gesamtgehäuses und des Elektronikgehäuses,
Fig. 7 eine Querschnittsdarstellung des Elektronikgehäuses und des Gesamtgehäuses mit einem gemeinsamen Gehäuse in einem zweiten Ausführungsbeispiel,
Fig. 8 eine perspektivische Darstellung mit einem Querschnitt durch das Elektronikgehäuse und das Gesamtgehäuse,
Fig. 9 eine perspektivische Ansicht des Gesamtgehäuses,
Fig. 10 eine perspektivische Darstellung des Gesamtgehäuses und des Elektronikgehäuses in unmontiertem Zustand der Elektronikkomponenten und der Steuerungskomponenten,
Fig. 11 eine perspektivische Ansicht des gemeinsamen Gehäuses mit vormontierten Steuerungskomponenten und Elektronikkomponenten, und
Fig. 12 eine perspektivische Ansicht des vollständig montierten, gemeinsamen Gehäuses für die Elektronikkomponenten und die Steuerungskomponenten mit einem Deckel.

Die Figuren sind lediglich schematischer Natur und dienen ausschließlich dem Verständnis der Erfindung. Dieselben Elemente sind mit den denselben Bezugszeichen gekennzeichnet.

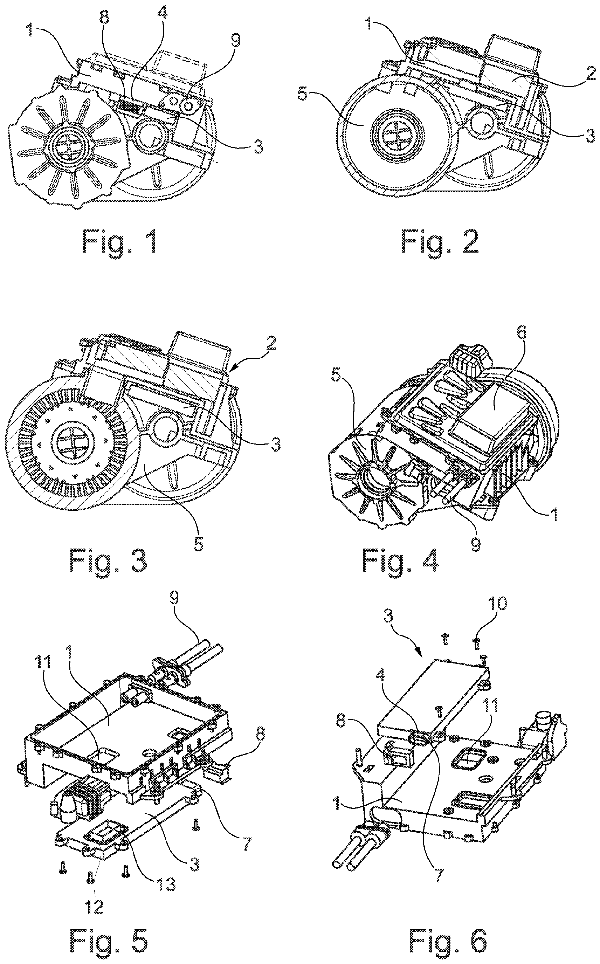

Die Figuren 1 bis 3 zeigen Querschnittsdarstellungen an verschiedenen axialen Positionen eines Elektronikgehäuses 1, in dem eine Leistungselektronik 2 und zumindest eine Niederspannungskomponente 3 mit einer Niederspannungsschnittstelle 4 für zugehörige Aktoren angeordnet sind, wobei das Elektronikgehäuse 1 mit einem Gesamtgehäuse 5, in dem der E-Achsen-Antrieb aufgenommen ist, verbunden ist. In dem Elektronikgehäuse 1 ist also nicht nur die Leistungselektronik 2 angeordnet, sondern auch die Niederspannungskomponenten 3, wie z. B. eine Motorsensorik, Temperatursensoren, eine Parksperrenaktorik oder eine Getriebeaktorik, werden von dem Elektronikgehäuse 1 eingehaust.

Wie in Fig. 4 zu sehen, ist das Elektronikgehäuse 1 direkt benachbart zu dem Gesamtgehäuse 5 angeordnet und mit ihm verbunden. Das Elektronikgehäuse 1 wird mit einem Deckel 6 abgeschlossen. Dabei ist der Deckel 6 an die Kontur der in dem Elektronikgehäuse angeordneten Komponenten angepasst. Der Deckel 6 ist so an dem Elektronikgehäuse 1 befestigt, dass er bei einer Wartung oder zum Demontieren einfach abgenommen werden kann.

Das Elektronikgehäuse 1 ist so ausgebildet, dass zwischen den Steuerkomponenten und der E-Achse eine Zwischenplatte angeordnet ist, so dass sich die jeweiligen Komponenten kaum elektromagnetisch gegenseitig beeinflussen. An der Niederspannungskomponente 3 und dem Elektronikgehäuse 1 ist ein Anschluss 7 vorhanden, an dem ein 28-PIN-Signalstecker 8 abdichtend aufgesetzt werden kann. An diesen Signalstecker 8 können weitere Aktoren angeschlossen werden. Auch ist an dem Elektronikgehäuse 1 ein Stromanschluss vorhanden, der (vgl. Fig. 5) als Battery Line 9 ausgebildet ist.

Das Elektronikgehäuse 1 ist vorzugsweise aus Aluminium gefertigt. Das Niederspannungsmodul/die Niederspannungskomponente/das Steuermodul 3 wird über mehrere Schrauben 10 (vgl. Fig. 6) an dem Elektronikgehäuse 1 befestigt. In dem Elektronikgehäuse 1 ist eine rechteckförmige Aussparung 11 vorhanden, in die im zusammengebauten Zustand ein rechteckförmiger Vorsprung 12 der Niederspannungskomponente 3 eingreift, wobei die beiden Bauteile über eine Dichtung 13 gegenüber einander abgedichtet sind.

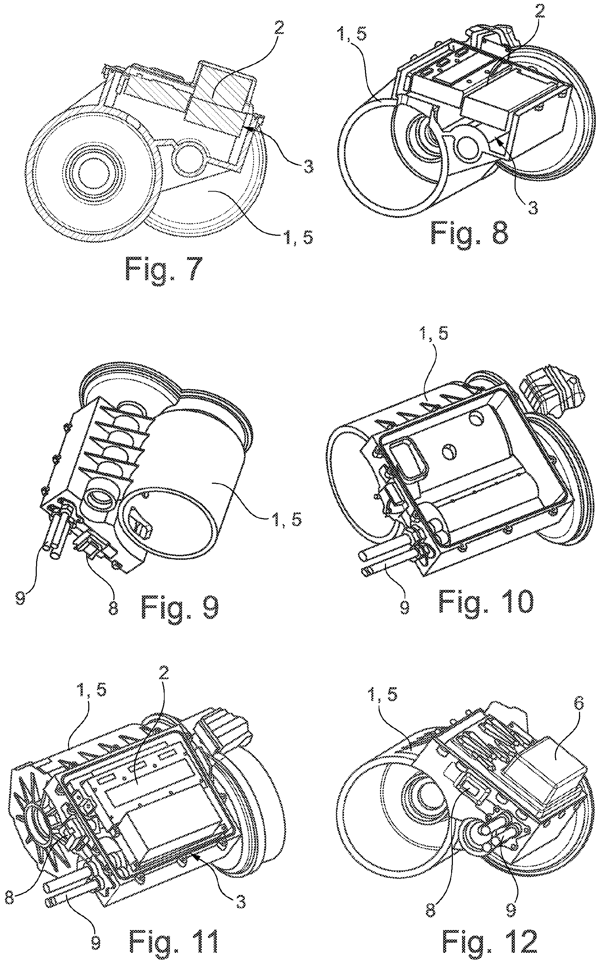

Die Figuren 7 bis 12 zeigen eine einteilige Ausbildung des Elektronikgehäuses 1 mit dem Gesamtgehäuse 5. In dem in montiertem Zustand unteren Teil des Gehäuses 1,5 werden also die Elektronikkomponenten wie die Leistungselektronik 2 und die Niederspannungskomponenten 3 angeordnet. An das Gehäuse 1, 5 für die Elektronikkomponenten und den E-Achsen-Antrieb ist in dem zweiten Ausführungsbeispiel der Anschluss 7 für den Signalstecker 8 an der Außenwand des gemeinsamen Gehäuses 1, 5 integriert. Auch gibt es einen Anschluss für die Stromversorgung, die Battery Line 9. Der untere Teil des Gehäuses, also der ursprüngliche Elektronikgehäuseteil 1, wird über den Deckel 6 zur Umgebung hin abgedichtet.

### Bezugszeichenliste

- 1: Elektronikgehäuse
- 2: Leistungselektronik
- 3: Niederspannungskomponente
- 4: Niederspannungsschnittstelle
- 5: Gesamtgehäuse
- 6: Deckel
- 7: Anschluss
- 8: Signalstecker
- 9: Stromanschluss/ Battery Line
- 10: Schraube
- 11: Aussparung
- 12: Vorsprung
- 13: Dichtung

## Patentansprüche

1. E-Achsen-Antrieb eines Kraftfahrzeugs, wobei der E-Achsen-Antrieb aufweist:
ein Gesamtgehäuse (5), das ausgelegt ist, um den E-Achsen-Antrieb aufzunehmen;
ein Elektronikgehäuse (1);
eine Leistungselektronik (2) zum Spannungsverarbeiten in Hochspannungssystemen oder 48-Volt-Spannungssystemen
eine Niederspannungskomponente (3), die eine Motorsensorik, ein Temperatursensor, eine Parksperren- oder eine Getriebeaktorik ist, wobei
die Leistungselektronik (2) und die Niederspannungskomponente (3) in das Elektronikgehäuse (1) eingesetzt sind, und
das Elektronikgehäuse (1) mit dem Gesamtgehäuse (5) verbunden ist.

2. E-Achsen-Antrieb nach Anspruch 1, **dadurch gekennzeichnet, dass** das Elektronikgehäuse (1) zumindest eine Niederspannungsschnittstelle (4) für einen Aktor aufweist.

3. E-Achsen-Antrieb nach Anspruch 1 oder 2, **dadurch gekennzeichnet, dass** das Elektronikgehäuse (1) einteilig/einmaterialig mit dem Gesamtgehäuse (5) ausgebildet ist oder dass das Elektronikgehäuse (1) und das Gesamtgehäuse (5) Schnittstellen aufweisen, die aufeinander abgestimmt sind.

4. E-Achsen-Antrieb nach Anspruch 3, **dadurch gekennzeichnet, dass** die Schnittstellen zum formschlüssigen Zusammenpassen geometrisch beschaffen sind.

5. E-Achsen-Antrieb nach einem der Ansprüche 1 bis 4, **dadurch gekennzeichnet, dass** an dem Elektronikgehäuse (1) ein Kühlanschluss vorhanden ist.

6. E-Achsen-Antrieb nach einem der Ansprüche 1 bis 5, **dadurch gekennzeichnet, dass** zwischen dem Elektronikgehäuse (1) und dem Gesamtgehäuse (5) ein Zwischenelement angeordnet ist.

## Claims

1. An electric axle drive of a motor vehicle, wherein the electric axle drive has: a general housing (5) which is designed to receive the electric axle drive;
an electronics housing (1);
a power electronics unit (2) for voltage processing in high-voltage systems or 48-volt voltage systems;
a low-voltage component (3) which is a motor sensor, a temperature sensor, a parking lock actuator or a transmission actuator, wherein
the power electronics unit (2) and the low-voltage component (3) are inserted into the electronics housing (1), and
the electronics housing (1) is connected to the general housing (5).

2. The electric axle drive according to claim 1, **characterized in that** the electronics housing (1) has at least one low-voltage interface (4) for an actuator.

3. The electric axle drive according to claim 1 or 2, **characterized in that** the electronics housing (1) is formed integrally/of a single material with the general housing (5) or **in that** the electronics housing (1) and the general housing (5) have interfaces which are adapted to one another.

4. The electric axle drive according to claim 3, **characterized in that** the interfaces are geometrically designed in order to achieve a form-fitting match.

5. The electric axle drive according to one of claims 1 to 4, **characterized in that** a cooling connection is provided on the electronics housing (1).

6. The electric axle drive according to one of claims 1 to 5, **characterized in that** an intermediate element is arranged between the electronics housing (1) and the general housing (5).

## Revendications

1. Propulsion par essieu électrique d'un véhicule automobile, dans laquelle la propulsion par essieu électrique présente : un boîtier commun (5), qui est réalisé pour recevoir la propulsion par essieu électrique ;
un boîtier électronique (1) ;
une électronique de puissance (2) pour le traitement de tension dans des systèmes haute tension ou des systèmes de tension à 48 volts
un composant basse tension (3), qui est un capteur de moteur, un capteur de température, un actionneur de frein de stationnement ou de transmission, dans laquelle
l'électronique de puissance (2) et le composant basse tension (3) sont insérés dans le boîtier électronique (1) et
le boîtier électronique (1) est raccordé au boîtier commun (5).

2. Propulsion par essieu électrique selon la revendication 1, **caractérisée en ce que** le boîtier électronique (1) présente au moins une interface basse tension (4) pour un actionneur.

3. Propulsion par essieu électrique selon la revendication 1 ou 2, **caractérisée en ce que** le boîtier électronique (1) est formé d'une seule pièce/d'un seul matériau avec le boîtier commun (5) ou que le boîtier électronique (1) et le boîtier commun (5) présentent des interfaces qui sont adaptés l'une à l'autre.

4. Propulsion par essieu électrique selon la revendication 3, **caractérisée en ce que** les interfaces pour l'ajustement par complémentarité de forme sont de nature géométrique.

5. Propulsion par essieu électrique selon l'une des revendications 1 à 4, **caractérisée en ce qu'**un raccord de refroidissement est disponible sur le boîtier électronique (1).

6. Propulsion par essieu électrique selon l'une des revendications 1 à 5, **caractérisée en ce que,** entre le boîtier électronique (1) et le boîtier commun (5) est agencé un élément intermédiaire.
